(19) Europäisches Patentamt / European Patent Office / Office européen des brevets

(11) **EP 1 528 482 B1**

(12) **FASCICULE DE BREVET EUROPEEN**

(45) Date de publication et mention de la délivrance du brevet:
**07.05.2008 Bulletin 2008/19**

(51) Int Cl.:
***G06F 17/30*** (2006.01)

(21) Numéro de dépôt: **04024800.7**

(22) Date de dépôt: **19.10.2004**

(54) **Procédé de classement de pages électroniques**

Verfahren zur Ordnung von elektronischen Seiten

Method for ranking electronic pages

(84) Etats contractants désignés:
**AT BE BG CH CY CZ DE DK EE ES FI FR GB GR HU IE IT LI LU MC NL PL PT RO SE SI SK TR**

(30) Priorité: **28.10.2003 FR 0312696**

(43) Date de publication de la demande:
**04.05.2005 Bulletin 2005/18**

(73) Titulaire: **FRANCE TELECOM**
**75015 Paris (FR)**

(72) Inventeur: **Laugier, Alexandre**
**06440 Peille (FR)**

(74) Mandataire: **Jeune, Pascale**
**FRANCE TELECOM/T&I/PIV/PI**
**38-40, rue du Général-Leclerc**
**92794 Issy Moulineaux Cédex 9 (FR)**

(56) Documents cités:
- **PAGE L ET AL: "The PageRank Citation Ranking: Bringing Order to the Web" TECHNICAL REPORT, 29 janvier 1998 (1998-01-29), XP002213518 STANDFORD UNIVERSITY**
- **HAVELIWALA T H: "Efficient Computation of PageRank" TECHNICAL REPORT, STANFORD UNIVERSITY, [Online] octobre 1999 (1999-10), pages 1-15, XP002294816 Extrait de l'Internet: URL:http://citeseer.ist.psu.edu/haveliwala 99efficient.html> [extrait le 2004-09-03]**
- **KUMAR R ET AL: "Trawling the Web for emerging cyber-communities" COMPUTER NETWORKS, ELSEVIER SCIENCE PUBLISHERS B.V., AMSTERDAM, NL, vol. 31, no. 11-16, 17 mai 1999 (1999-05-17), pages 1481-1493, XP004304568 ISSN: 1389-1286**
- **KLEINBERG J M: "Authoritative sources in a hyperlinked environment" JOURNAL OF THE ACM, ASSOCIATION FOR COMPUTING MACHINERY, NEW YORK, US, vol. 46, no. 5, septembre 1999 (1999-09), pages 604-632, XP002226183 ISSN: 0004-5411**
- **BOUKLIT M, JEAN-MARIE A: "Une analyse de PageRank, une mesure de popularité des pages Web" QUATRIÈMES RENCONTRES FRANCOPHONES SUR LES ASPECTS ALGORITHMIQUES DES T¹L¹COMMUNICATIONS, 23 mai 2002 (2002-05-23), pages 1-8, XP002294817 MÈZE, FRANCE**
- **BOAZ BARAK, UDI WIEDER: "Expander Graphs and their Applications, Lecture 3: Random Walks on Expander Graphs" LECTURE NOTES FOR A COURSE GIVEN BY NATI LINIAL AND AVI WIGDERSON, mars 2002 (2002-03), XP002294818 THE HEBREW UNIVERSITY, ISRAEL**

EP 1 528 482 B1

## Description

La présente invention se rapporte au domaine des télécommunications et en particulier au domaine des moteurs de recherche pour la recherche de pages électroniques.

Actuellement, les méthodes de recherche de pages sur un réseau de télécommunication tel le réseau Internet dit Web, peuvent être classées en deux familles. Une première famille qui regroupe les méthodes de recherche par pertinence et une seconde famille qui regroupe les méthodes de classement par rang. La première famille fait l'objet de peu de publication sauf en ce qui concerne les travaux axés sur une recherche d'information par mots clefs. La seconde famille fait l'objet de nombreuses publications. Parmi celles-ci, il est possible de citer les documents suivants, "What can you do with a Web in your pocket ?" Data Engineering Bulletin, 1998 ayant pour auteurs S.Brin, R.Motwani, L.Page et T.Winograd, "Efficient Computation of PageRank", Technical report, Computer Science Department, Stanford University, 1999 ayant pour auteur T.Haveliwala, "Authoritative Sources in Hyperlinked Environment", Proceedings of the 9th Annual ACM-SIAM symposium on Discrete Algorithms, pages 668-677, 1998, "The PageRank Citation Ranking : Bringing Order on the Web", Technical report, Computer Science Departement, Stanford University, 1998 ayant pour auteurs L.Page, S.Brin, R.Motwani et T.Winograd.

Bien qu'elles fassent l'objet de peu de publications, les méthodes de recherche de pages exploitant la notion de pertinence pour une requête donnée sont les plus courantes. Les algorithmes correspondant font partie de nombreux moteurs de recherche, certains bien connus sous leur nom commercial tels que "Alta Vista", "Voilà", "Lycos". Ces algorithmes s'appuient sur le fait qu'une page est d'autant plus pertinente pour une requête donnée qu'elle comporte un grand nombre d'occurrences des mots formulant la requête et que ces mots ont dans le texte de la page un enchaînement proche de celui formulé dans la requête. L'inconvénient majeur de ces algorithmes est qu'ils peuvent être détournés par des personnes mal intentionnées qui désirent voir figurer leurs pages en tête du classement. A cette fin, il leur suffit de faire figurer dans leurs pages un très grand nombre de fois les mots pouvant être utilisés dans les requêtes formulées par les internautes et pour lesquelles ces personnes veulent que leurs pages soient sélectionnées. Cette pratique est connue sous le terme anglo-saxon spamming.

Un autre moteur de recherche bien connu, dont le nom commercial est "Google" exploite le classement par rang. Le rang d'une page est une fonction numérique du nombre de pages qui pointent sur cette page et du rang de ces pages. Le rang d'une page d'indice p est donné par la formule suivante :

$$\rho(p) = K\left( \alpha \sum_{q \in \Gamma^-(p)} \frac{\rho(p)}{\left| \delta^+(p) \right|} + (1-\alpha) E(p) \right)$$

dans laquelle K est une constante de normalisation qui permet de s'assurer que $\rho(p)$ est une probabilité. $\alpha$ est un facteur qui permet en fonction de sa valeur de privilégier soit le fait que beaucoup de pages pointent sur la page p, soit de donner une forte importance à la page p elle-même. $\Gamma^-(p)$ désigne l'ensemble des pages pointant sur p. $|\delta^+(q)|$ est le nombre de page sur lesquelles la page q pointe. $E(p)$ représente la probabilité d'être sur la page p. Cette méthode de classement des pages est connue sous le terme anglo-saxon "PageRank". Un point sensible de cette méthode est la détermination de l'importance qu'il faut donner à la somme des rangs pointant sur la page p dans le calcul du rang de celle-ci, autrement dans le choix de la valeur à donner au paramètre $\alpha$.

Le document intitulé "Trawling the Web for emerging cyber-communities", COMPUTER NETWORKS, ELSEVIER SCIENCE PUBLISHERS B.V., AMSTERDAM, NL, vol.31, no.11-16, 17 mai 1999 (1999-05-17), pages 1481-1493, ISSN: 1389-1286 est un article qui décrit une méthode permettant de détecter des communautés d'intérêt récentes sur Internet. Cette méthode se base sur une analyse du graphe formé par la toile Internet, et procède en deux étapes. La première étape consiste à trouver des sous-graphes complets bipartites dans un ensemble de pages Internet. Ces graphes bipartites sont des graphes formés essentiellement d'un ensemble de pages "fan" pointant sur un ensemble de pages "centres". La notion de page "fan" permet d'élaguer le nombre de pages Internet à examiner, car une page "fan" possède des liens vers au moins six sites Internet différents.

Aussi, le problème technique à résoudre par l'objet de la présente invention est de proposer un procédé de classement de pages électroniques accessibles sur un réseau de télécommunication et appartenant à un graphe $G_w$ donné d'ordre n qui soit indépendant de la sémantique, c'est-à-dire qui n'utilise pas la notion de pertinence et qui soit indépendant d'un classement par rang.

Une solution au problème technique posé consiste, selon la présente invention, en un procédé défini dans la revendication 1. Le procédé comprend en particulier les étapes suivantes :

- à déterminer une clique K du graphe $G_w$ au moyen d'un processus de calcul de clique de cardinalité maximum,

- à déterminer un graphe expansif qui comprend la clique précédente et ce, au moyen d'un algorithme qui, dans une boucle et à chaque itération i de la boucle, i étant initialisé à 0, détermine le contenu d'un graphe courant comme étant composé d'un graphe $G_i=(V_i, E_i)$ déterminé à l'itération précédente et des voisins de ce dernier graphe $G_i=(V_i, E_i)$ parmi les sommets du graphe $G_w$, le graphe $G_0$ de la première itération étant initialisé au contenu de la clique K et la boucle étant parcourue tant que la distance entre la distribution de probabilité d'une marche aléatoire dans le graphe courant et la distribution uniforme est inférieure à un seuil donné, le graphe expansif étant le graphe obtenu lors de la dernière itération,

- à classer les pages électroniques du graphe expansif en positionnant en tête les pages correspondant aux sommets de $V_0$, suivies des pages correspondant aux sommets de $V_1$ et ainsi de suite jusqu'au pages correspondant aux sommets du dernier graphe et, pour un même ensemble de sommets $V_i$, à classer les pages électroniques à l'aide d'un tirage aléatoire.

Le procédé conforme à l'invention résout le problème posé. En effet, le procédé repose uniquement sur les propriétés topologiques d'un graphe : le procédé utilise les propriétés de la distribution stationnaire d'une marche aléatoire, démarrée dans un sous-ensemble de sommets particuliers qui correspond à une clique $G_0$ de cardinalité maximum. Le procédé exploite le fait que les membres d'une communauté thématique du Web, ou de tout autre réseau, ont des pages qui pointent essentiellement vers les pages des autres membres de la communauté. L'ensemble de ces pages forme un graphe dont les sommets sont les pages et dont les arêtes sont les liens entre pages, ce graphe se comporte comme un graphe expansif lors d'une marche aléatoire démarrée dans ce graphe.

Un procédé selon l'invention permet avantageusement de s'affranchir des problèmes liés au "spamming".

Selon un mode particulier de mise en oeuvre d'un procédé selon l'invention, le graphe $G_w$ est composé des pages électroniques du réseau Internet ou Web.

Selon un mode particulier de mise en oeuvre d'un procédé selon l'invention, le graphe $G_w$ est un graphe obtenu à l'issue d'une recherche de composantes connexes dans un sous-graphe du réseau Internet.

Selon un mode particulier de mise en oeuvre, le procédé est associé à un moteur de recherche ce qui permet de présenter à un utilisateur les pages les plus intéressantes en réponse à une requête préalablement formulée. Selon ce mode, le graphe $G_w$ est composé des pages électroniques sélectionnées à l'issue d'une recherche thématique effectuée à l'aide du moteur de recherche.

D'autres caractéristiques et avantages de l'invention apparaîtront lors de la description qui suit faite en regard de figures annexées données à titre d'exemples non limitatifs.

La figure 1 est un organigramme d'un procédé selon l'invention.

La figure 2 est un schéma d'un algorithme mis en oeuvre par un procédé selon l'invention.

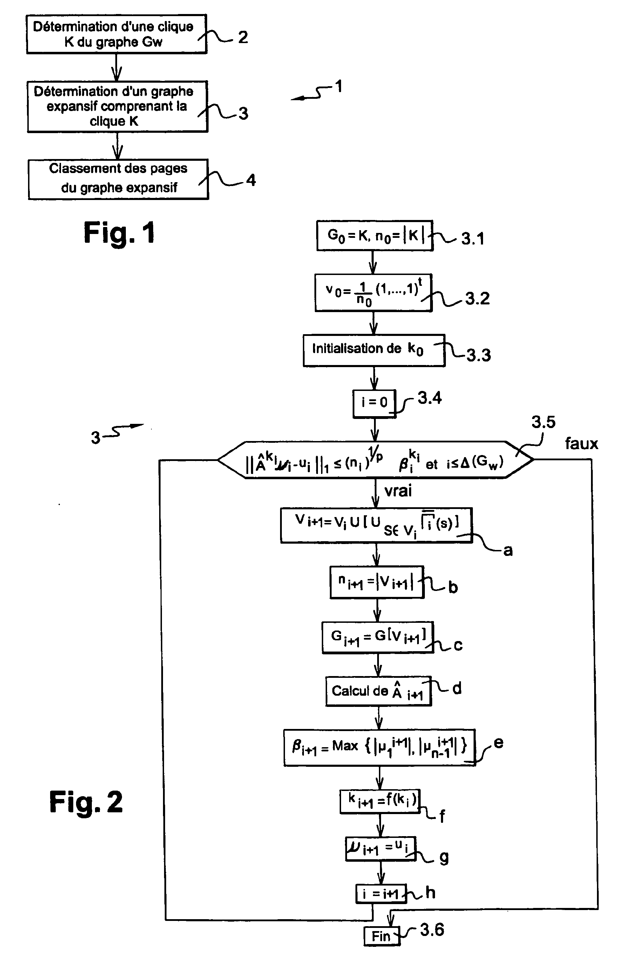

Un procédé selon l'invention dont un organigramme est donné par la figure 1 détermine les pages centrales d'un graphe $G_w$ composé de pages électroniques. Les pages sont centrales du point de vue d'une communauté thématique. A cette fin, un procédé 1 selon l'invention effectue un classement de pages électroniques accessibles sur un réseau de télécommunication et qui appartiennent au graphe $G_w$, d'ordre n. Par exemple, le graphe $G_w$ comprend toutes les pages du Web. Pour effectuer ce classement le procédé comprend les étapes décrites ci-après.

Dans une première étape 2, le procédé détermine une clique K du graphe $G_w$ au moyen d'un processus de calcul de clique de cardinalité maximum. Une clique ou graphe complet est un graphe $G_0 = (V_0,E_0)$ dont tout sommet $i \in V_0$ est relié par au moins une arête à tout sommet $j \in V_0\text{-}\{i\}$. Il existe différents processus connus de tel calcul. Citons par exemple, les heuristiques rapides et performantes telles que décrites dans les articles "A fast and simple randomized parallel algorithm for the maximal independent set problem", Journal of Algorithms, 7, 1986 des auteurs N.Alon, L.Babai et A.Itai, "Finding a maximum clique in an arbitrary graph", SIAM Journal on Computing, 14:1054-1068, 1986, des auteurs E.Balas et C.S. Yu, "A greedy heuristic for the ser-covering problem", Mathematics of Operations Research, 4: 233-235, 1979 de l'auteur V.Chvátal.

Cette clique K correspond à un noyau composé des pages centrales d'une communauté thématique. En effet les membres d'une communauté thématique du Web ont des pages qui pointent essentiellement vers les pages des autres membres de la communauté. Le nombre de ces pages dites centrales et qui sont très fortement reliées entre elles, est assez petit par rapport au nombre total de pages de la communauté. Le graphe constitué des pages, pour ce qui est des sommets, et des liens pour ce qui est des arêtes, induit par cette clique K, peut être assimilé à un graphe régulier et expansif. Un graphe est dit régulier si tous ses sommets ont le même degré, c'est-à-dire le même nombre d'arêtes incidentes. Un graphe $G = (V,E)$ régulier est dit expansif si pour tout sous-ensemble de sommets $S \subset V$ tel que

$$|S| \leq \frac{|V|}{2}$$ on a $\Gamma(S) \geq \alpha|S|$, $\Gamma(S)$ étant l'ensemble des voisins des sommets de S qui ne sont pas dans S. $|X|$ représente le nombre d'éléments de l'ensemble X, c'est le cardinal de l'ensemble et $\alpha$ est un nombre supérieur ou égal à un. Deux voisins sont deux sommets reliés par au moins une arête.

Le nombre de sommets du graphe qu'il est possible d'atteindre en k étapes en partant d'un sommet quelconque du graphe croît très rapidement avec k, cette expansion justifie l'appellation graphe expansif. Cet accroissement du nombre de sommets accessibles depuis un sommet de départ se mesure par une quantité

$$h(G) = Min\left\{\frac{\Gamma(S)}{|S|}, S \subset V\right\}$$ appelée facteur d'expansion du graphe. La détermination d'un minorant et d'un majorant de $h(G)$ est effectuée au moyen du calcul des valeurs propres de la matrice A d'adjacence du graphe $G = (V,E)$.

A un graphe G = ($V,E$) est associé une matrice A dite d'adjacence. Elle est définie de la manière suivante. Les lignes et les colonnes de la matrice A sont indexés par les sommets du graphe, l'élément $a_{ij}$ vaut 1 si le sommet i est relié au sommet j par une arête (i est voisin de j) et 0 sinon.

La matrice A est symétrique. Par suite, elle possède $n = |V|$ valeurs propres réelles : $\mu_0 \geq \mu_1 \geq ... \geq \mu_{n-1}$. En outre, la somme des coefficients de chaque ligne et de chaque colonne vaut d, d étant le degré de chaque sommet car le graphe G est supposé régulier. Ceci permet d'écrire $\mu_0 = d$. Soit $\lambda = Max\{|\mu_1|,|\mu_{n-1}|\}$, alors le théorème suivant donne un encadrement du facteur d'expansion : $\dfrac{d-\lambda}{2} \leq h(G) \leq \sqrt{2d(d-\lambda)}$. Le procédé s'appuie sur un deuxième théorème qui est le suivant : la distribution stationnaire d'une marche aléatoire dans un graphe expansif G est la distribution uniforme représentée par le vecteur $u = \dfrac{1}{n}(1,...,1)'$. Ceci revient à dire qu'en effectuant une marche aléatoire suffisamment longue dans le graphe G, la probabilité que cette marche aboutisse à un sommet quelconque est $\dfrac{1}{n}$, n

étant le nombre de sommets du graphe. Le procédé s'appuie en outre sur un troisième théorème qui est le suivant :

soit G un graphe expansif dont la matrice d'adjacence normalisée est $\hat{A} = \dfrac{1}{d}A$, la somme des coefficients sur chaque ligne ou chaque colonne est un et le coefficient $\hat{a}_{ij}$ est la probabilité de transition du sommet i vers le sommet j. Soit une marche aléatoire dont le sommet initial est donné par le vecteur de distribution de probabilité $v_p$, alors

$$\left\|\hat{A}^k v_p - u\right\|_1 \leq \sqrt{n}\beta^k$$ avec $\beta = Max\{|\hat{\mu}_1|,|\hat{\mu}_{n-1}|\}$ et $\|.\|_1$ la somme des coordonnées du vecteur. Le coefficient $\beta$ est

strictement plus petit que 1. Par conséquent, l'écart entre la distribution de probabilité à l'étape k et la distribution stationnaire décroît exponentiellement en fonction de k. En d'autres termes, la somme des écarts devient rapidement petite, donc les écarts diminuent aussi rapidement. Ceci traduit que la convergence de la distribution de probabilité de la marche aléatoire vers la distribution uniforme s'effectue rapidement.

L'établissement des théorèmes précédents est présenté dans le document "Expander graphs and their applications, Lecture 3: Random Walks on Expander Graphs", Notes prises par Boaz Barak et Udi Wieder, March 2002, suite à un cours donné par Nati Linial and Avi Wigderson à l'Université hébraïque, Israel.

La périphérie de la clique K comprend des sommets qui, de même que les sommets de K, pointent sur un nombre sensiblement équivalent de pages de la communauté. Les sommets associés à ces pages et ceux de la clique K ont donc des degrés égaux. Ceci permet de considérer que le graphe induit par l'ensemble constitué de la clique K et de ce nouvel ensemble de sommets, L, est un graphe régulier expansif. Les pages de l'ensemble L ne pointent pas uniquement sur des pages appartenant à la clique K. Elles peuvent pointer sur des pages plus excentrées et former des cliques dans certains sous-ensembles de L. A la périphérie de la communauté, il y a des pages qui ont beaucoup moins de liens avec les pages des niveaux antérieurs. L'ensemble de ces pages est noté E et le graphe induit par $K \cup L \cup E$ n'est pas un graphe expansif : les pages qui ne sont pas centrales pour la communauté ne font pas partie du graphe expansif $K \cup L$ car elles ne pointent pas sur un nombre sensiblement équivalent de pages de la communauté.

Dans une deuxième étape 3, le procédé détermine le graphe expansif $K \cup L$ qui comprend la clique K précédente, c'est-à-dire déterminée lors de la première étape. La détermination de $K \cup L$ s'effectue au moyen d'un algorithme illustré par la figure 2 qui, dans une boucle et à chaque itération i de la boucle, i étant initialisé à 0, détermine le contenu d'un graphe courant. Ce graphe courant est composé d'un graphe $G_i=(V_i, E_i)$ déterminé à l'itération précédente et des voisins de ce dernier graphe $G_i=(V_i, E_i)$ parmi les sommets du graphe $G_w$.

L'algorithme peut s'écrire de manière algorithmique sous la forme suivante :

étape 3.1 : $G_0 = K, n_0 = |K|$

étape 3.2 : $v_0 = \dfrac{1}{n_0}(1,...1)'$

étape 3.3 : initialiser $k_0$.

étape 3.4 : $i = 0$

étape 3.5 : Tant que $\left\|\hat{A}^{k_i} v_i - u_i\right\|_1 \leq (n_i)^{\frac{1}{p}} \beta_i^{k_i}$ et $i \leq \Delta(G_w)$

(a) $V_{i+1} = V_i \cup [U_{s \in V_i} \overline{\Gamma}_i(s)]$
(b) $n_{i+1} = |V_{i+1}|$
(c) $G_{i+1} = G[V_{i+1}]$
(d) calculer $\hat{A}_{i+1}$

(e) $\beta_{i+1} = Max\left\{\left|\mu_1^{i+1}\right|, \left|\mu_{n-1}^{i+1}\right|\right\}$

(f) $k_{i+1} = f(k_i)$
(g) $v_{i+1} = u_i$
(h) $i = i + 1$

étape 3.6 : Fin Tant que

Les variables sont telles que :

$G_w = (V_w, E_w)$ désigne le graphe de départ, par exemple celui du Web,
$\Delta(G_w)$ désigne le diamètre du graphe $G_w$
K désigne la clique de cardinalité maximum déterminée dans $G_w$
$G_i = (V_i, E_i)$ désigne le graphe courant à l'étape i,
$G[V_{i+1}]$ désigne le sous-graphe induit par l'ensemble de sommets $V_{i+1}$
$\Gamma_i(s)$ désigne l'ensemble des voisins du sommet s dans le graphe $G_i$
$\overline{\Gamma}_i(s)$ désigne l'ensemble des voisins du sommet s dans le graphe $G_w$ qui ne sont pas dans le graphe $G_i$
$\hat{A}_i$ désigne la matrice d'adjacence normalisée du graphe $G_i$

$\beta_i = Max\left\{\left|\mu_1^i\right|, \left|\mu_{n-1}^i\right|\right\} < 1$ est la deuxième valeur propre en valeur absolue de la matrice $\hat{A}_i$

p paramètre de convergence de la marche aléatoire est un entier naturel
$n_i$ désigne le nombre de sommets du graphe $G_i$
$k_i$ désigne le nombre de pas de la marche aléatoire effectuée à l'étape i
$v_i$ est le vecteur précisant la distribution initiale de la marche aléatoire effectuée à l'étape i
$u_i$ désigne le vecteur de distribution uniforme sur le graphe $G_i$.

Dans une première étape de l'algorithme, bloc 3.1 de la figure 2, le graphe $G_0$ de la première itération est initialisé au contenu de la clique K. Dans une deuxième étape de l'algorithme, bloc 3.2 de la figure 2, le vecteur de départ de la marche aléatoire est initialisé à la distribution stationnaire. Dans une troisième étape de l'algorithme, bloc 3.3, le nombre de pas de la marche aléatoire est initialisé a une valeur déterminée. Cette valeur de $k_0$ est par exemple

la suivante : $k_0 = \dfrac{n_0}{5}$. Dans une quatrième étape de l'algorithme, bloc 3.4, le nombre d'itération de la boucle est initialisé. Dans une cinquième étape de l'algorithme, bloc 3.5, le procédé parcourt une boucle tant que la distance entre la distribution de probabilité d'une marche aléatoire dans le graphe courant et la distribution uniforme est inférieure à un seuil donné. Le nombre de parcours est limité au diamètre du graphe $G_w$. Cette boucle comprend plusieurs sous-étapes a à h. Lors de la sous-étape a de l'algorithme, le procédé constitue l'ensemble des sommets de l'itération courante. Cet ensemble est égal à l'ensemble des sommets de l'itération précédente complété par les voisins des sommets du graphe de cette dernière itération. Lors de la sous-étape b de l'algorithme, le procédé calcul le nombre de sommets du graphe courant $G_{i+1}$. Lors de la sous-étape c de l'algorithme, le procédé constitue le graphe de l'itération courante. Ce graphe est le sous-graphe du graphe $G_w$ induit par l'ensemble de sommets $V_{i+1}$; les sommets du graphe

$G_{i+1}$ correspondent aux sommets compris dans l'ensemble $V_{i+1}$. Les arêtes du graphe $G_{i+1}$ correspondent aux arêtes du graphe $G_w$ qui ont leurs deux extrémités dans l'ensemble $V_{i+1}$. Lors de la sous-étape d de l'algorithme, le procédé constitue la matrice d'adjacence normalisée du graphe courant $G_{i+1}$. Lors de la sous-étape e de l'algorithme, le procédé calcule la deuxième valeur propre en valeur absolue de la matrice d'adjacence normalisée du graphe courant $G_{i+1}$. Lors de la sous-étape f de l'algorithme, le procédé calcule le nombre de pas de la marche aléatoire sur le graphe $G_{i+1}$. Le calcul est le résultat d'une fonction f appliquée au nombre de pas $k_i$ de l'itération précédente. La fonction f peut être définie par la relation suivante $$k_{i+1} = k_i + \frac{\sum\limits_{s \in V_{i-1}} \overline{\Gamma}_{i-1}(s)}{n_{i-1}}.$$ Lors de la sous-étape g de l'algorithme, le procédé détermine le vecteur $v_{i+1}$ de probabilité de présence lors du début de la marche aléatoire sur le graphe $G_{i+1}$. Ce vecteur est égal à la distribution obtenue après la marche aléatoire sur le graphe $G_i$. Lors de la sous-étape h de l'algorithme, le procédé incrémente le compteur de parcours de la boucle.

Le graphe expansif $K \cup L$ est le graphe obtenu lors de la dernière itération.

Dans une troisième étape 4, le procédé classe les pages électroniques en positionnant en tête les pages correspondant aux sommets de $V_0$. A la suite, le procédé classe les pages correspondant aux sommets de $V_1$ et ainsi de suite jusqu'aux pages correspondant aux sommets du dernier graphe. Pour un même ensemble de sommets $V_i$, le procédé classe les pages électroniques à l'aide d'un tirage aléatoire.

## Revendications

1. Procédé (1) de classement de pages électroniques accessibles sur un réseau de télécommunication et appartenant à un graphe $G_w$ donné composé d'un ensemble $V_w$ de sommets et d'un ensemble $E_w$ d'arêtes correspondant respectivement à des pages électroniques et des liens entre ces pages, mis en oeuvre par un ordinateur, qui comprend les étapes qui consistent :

   - à déterminer (2) une clique K du graphe $G_w$ au moyen d'un processus de calcul de clique de cardinalité maximum,
   - à déterminer (3) un graphe expansif qui comprend la clique K précédente et ce, au moyen d'un algorithme qui, dans une boucle (3.5) et à chaque itération i de la boucle, i étant initialisé à 0, détermine le contenu d'un graphe courant comme étant composé d'un graphe $G_i=(V_i, E_i)$ déterminé à l'itération précédente et des sommets voisins de ce dernier graphe $G_i=(V_i, E_i)$ parmi les sommets du graphe $G_w$, le graphe $G_0$ de la première itération étant initialisé au contenu de la clique K et la boucle étant parcourue tant que la distance entre la distribution de probabilité d'une marche aléatoire dans le graphe courant et la distribution uniforme est inférieure à un seuil donné, le graphe expansif étant le graphe obtenu lors de la dernière itération et
   - à classer (4) les pages électroniques du graphe expansif en positionnant en tête les pages correspondant aux sommets de $V_0$, suivies des pages correspondant aux sommets de $V_1$ et ainsi de suite jusqu'aux pages correspondant aux sommets du dernier graphe et, pour un même ensemble de sommets $V_i$, à classer les pages électroniques à l'aide d'un tirage aléatoire,
   - à présenter à un utilisateur de l'ordinateur les pages électroniques classées en réponse à une requête.

2. Procédé (1) de classement de pages électroniques selon la revendication 1 dans lequel le graphe $G_w$ est composé des pages électroniques du réseau Internet.

3. Procédé (1) de classement de pages électroniques selon la revendication 1 dans lequel le graphe $G_w$ est un graphe obtenu à l'issue d'une recherche thématique à l'aide d'un moteur de recherche dans un graphe du réseau Internet.

4. Procédé (1) de classement de pages électroniques selon la revendication 1 dans lequel le graphe $G_w$ est composé de pages électroniques sélectionnées à l'issue d'une recherche thématique effectuée à l'aide d'un moteur de recherche.

5. Procédé (1) de classement de pages électroniques selon la revendication 1 dans lequel le graphe $G_w$ est un graphe obtenu à l'issue d'une recherche de composantes connexes dans un graphe du réseau Internet.

**Claims**

1. Method (1) for ranking electronic pages accessible on a telecommunication network and belonging to a given graph $G_w$ composed of a set $V_w$ of vertices and of a set $E_w$ of edges corresponding respectively to electronic pages and links between these pages, implemented by a computer, which comprises the steps which consist:

   - in determining (2) a clique K of the graph $G_w$ by means of a process for calculating a clique of maximum cardinality,
   - in determining (3) an expander graph which comprises the previous clique K, doing so by means of an algorithm which, in a loop (3.5) and at each iteration i of the loop, i being initialized to 0, determines the content of a current graph as being composed of a graph $G_i = (V_i, E_i)$ determined at the previous iteration and of the neighbouring vertices of the latter graph $G_i = (V_i, E_i)$ from among the vertices of the graph $G_w$, the graph $G_0$ of the first iteration being initialized to the content of the clique K and the loop being traversed so long as the distance between the probability distribution of a random walk through the current graph and the uniform distribution is less than a given threshold, the expander graph being the graph obtained during the last iteration and
   - in ranking (4) the electronic pages of the expander graph by positioning at the top the pages corresponding to the vertices of $V_0$, followed by the pages corresponding to the vertices of $V_1$ and so on and so forth until the pages corresponding to the vertices of the last graph and, for one and the same set of vertices $V_i$, in ranking the electronic pages with the aid of a random draw,
   - in presenting the ranked electronic pages to a user of the computer in response to a query.

2. Method (1) for ranking electronic pages according to Claim 1, in which the graph $G_w$ is composed of the electronic pages of the Internet network.

3. Method (1) for ranking electronic pages according to Claim 1, in which the graph $G_w$ is a graph obtained on completion of a thematic search with the aid of a search engine through a graph of the Internet network.

4. Method (1) for ranking electronic pages according to Claim 1, in which the graph $G_w$ is composed of electronic pages selected on completion of a thematic search performed with the aid of a search engine.

5. Method (1) for ranking electronic pages according to Claim 1, in which the graph $G_w$ is a graph obtained on completion of a search for connected components in a graph of the Internet network.

**Patentansprüche**

1. Verfahren (1) zur Ordnung elektronischer Seiten, auf die auf einem Telekommunikationsnetz zugegriffen werden kann und die zu einem gegebenen Graphen $G_w$ gehören, der aus einer Gruppe $V_w$ von Knoten und einer Gruppe $E_w$ von Kanten besteht, denen jeweils elektronische Seiten und Verbindungen zwischen diesen Seiten entsprechen, das durch einen Computer durchgeführt wird und die folgenden Schritte aufweist:

   - Bestimmen (2) einer Clique K des Graphen $G_w$ mit Hilfe eines Verfahrens zum Berechnen der Clique maximaler Kardinalität,
   - Bestimmen (3) eines Expansionsgraphen, der die vorhergehende Clique K aufweist, und zwar mit Hilfe eines Algorithmus, der in einer Schleife (3.5) und bei jeder Iteration i der Schleife, wobei i auf 0 initialisiert ist, den Inhalt eines gegenwärtigen Graphen als aus einem Graphen $G_i = (V_i, E_i)$, der bei der vorhergehenden Iteration bestimmt wurde, und benachbarten Knoten dieses letzten Graphen $G_i = (V_i, E_i)$ unter den Knoten des Graphen $G_w$ bestehend bestimmt, wobei der Graph $G_0$ der ersten Iteration auf den Inhalt der Clique K initialisiert wird und die Schleife so lange durchlaufen wird, wie die Distanz zwischen der Wahrscheinlichkeitsverteilung einer Irrfahrt im gegenwärtigen Graphen und der Gleichverteilung kleiner als ein gegebener Schwellwert ist, wobei der Expansionsgraph der bei der letzten Iteration erhaltene Graph ist, und
   - Ordnen (4) der elektronischen Seiten des Expansionsgraphen durch Positionieren der Seiten, die den Knoten von $V_0$ entsprechen, am Anfang, gefolgt von den Seiten, die den Knoten von $V_1$ entsprechen, und so weiter, bis zu den Seiten, die den Knoten des letzten Graphen entsprechen, und Ordnen der elektronischen Seiten für eine gleiche Gruppe von Knoten $V_i$ mit Hilfe einer zufälligen Auswahl,
   - Darstellen der geordneten elektronischen Seiten für einen Benutzer des Computers in Reaktion auf eine Abfrage.

2. Verfahren (1) zur Ordnung elektronischer Seiten nach Anspruch 1, wobei der Graph $G_w$ aus elektronischen Seiten des Internets besteht.

3. Verfahren (1) zur Ordnung elektronischer Seiten nach Anspruch 1, wobei der Graph $G_w$ ein Graph ist, der nach einer thematischen Suche mit Hilfe einer Suchmaschine in einem Graphen des Internets erhalten wurde.

4. Verfahren (1) zur Ordnung elektronischer Seiten nach Anspruch 1, wobei der Graph $G_w$ aus elektronischen Seiten besteht, die nach einer mit Hilfe einer Suchmaschine ausgeführten thematischen Suche ausgewählt wurden.

5. Verfahren (1) zur Ordnung elektronischer Seiten nach Anspruch 1, wobei der Graph $G_w$ nach einer Suche von Zusammenhangskomponenten in einem Graphen des Internets erhalten wurde.

EP 1 528 482 B1

Détermination d'une clique
K du graphe Gw  — 2

Détermination d'un graphe
expansif comprenant la
clique K  — 3

Classement des pages
du graphe expansif  — 4

**Fig. 1**

— 1

$G_0 = K,\ n_0 = |K|$ — 3.1

$v_0 = \frac{1}{n_0}(1,\dots,1)^t$ — 3.2

Initialisation de $k_0$ — 3.3

$i = 0$ — 3.4

3 —

$\|\hat{A}^{k_i}v_i - u_i\|_1 \le (n_i)^{1/p}\ \beta_i^{k_i}$ et $i \le \Delta(G_w)$ — 3.5   faux

vrai

$V_{i+1} = V_i \cup [\,\bigcup_{s \in V_i} \overline{\Gamma_i}(s)\,]$ — a

$n_{i+1} = |V_{i+1}|$ — b

$G_{i+1} = G[V_{i+1}]$ — c

Calcul de $\hat{A}_{i+1}$ — d

$\beta_{i+1} = \mathrm{Max}\{|\mu_1^{i+1}|, |\mu_{n-1}^{i+1}|\}$ — e

$k_{i+1} = f(k_i)$ — f

$u_{i+1} = u_i$ — g

$i = i+1$ — h

**Fig. 2**

Fin — 3.6

9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **S.BRIN ; R.MOTWANI ; L.PAGE ; T.WINOGRAD.** What can you do with a Web in your pocket ?. *Data Engineering Bulletin,* 1998
- **T.HAVELIWALA.** Efficient Computation of PageRank. *Technical report, Computer Science Department,* 1999
- Authoritative Sources in Hyperlinked Environment. *Proceedings of the 9th Annual ACM-SIAM symposium on Discrete Algorithms,* 1998, 668-677
- **L.PAGE ; S.BRIN ; R.MOTWANI ; T.WINOGRAD.** The PageRank Citation Ranking : Bringing Order on the Web. *Technical report, Computer Science Departement,* 1998
- Trawling the Web for emerging cyber-communities. COMPUTER NETWORKS. ELSEVIER SCIENCE PUBLISHERS B.V, 17 Mai 1999, vol. 31, 1481-1493
- **N.ALON ; L.BABAI ; A.ITAI.** A fast and simple randomized parallel algorithm for the maximal independent set problem. *Journal of Algorithms,* 1986, vol. 7
- **E.BALAS ; C.S. YU.** Finding a maximum clique in an arbitrary graph. *SIAM Journal on Computing,* 1986, vol. 14, 1054-1068
- **V.CHVÁTAL.** A greedy heuristic for the ser-covering problem. *Mathematics of Operations Research,* 1979, vol. 4, 233-235